# EUROPÄISCHE PATENTSCHRIFT

(11) **EP 0 377 187 B1**
(45) Veröffentlichungstag und Bekanntmachung des Hinweises auf die Patenterteilung: **25.08.1993**
(21) Anmeldenummer: 89123861.0
(22) Anmeldetag: 23.12.1989
(51) Int. Cl.: G01B 5/20

(54) **Verfahren und Vorrichtung zum Vermessen der Form von Zylinderbohrungen in Werkstücken**
Method and device for measuring the form of cylindrical bores in work pieces
Méthode et dispositif pour mesurer la forme des cylindres d'alésage des pièces à usines

(30) Priorität: 04.01.1989 DE 3900106
(43) Veröffentlichungstag der Anmeldung: 11.07.1990
(73) Patentinhaber: PAT MESSTECHNIK GMBH, 76133 Karlsruhe (DE)
(72) Erfinder: Hartmann, Rudolf, Ing.-grad (FH), D-7516 Karlsbad-Auerbach (DE); Overlach, Knud, Dr.-Ing., D-7505 Ettlingen 6 (DE); Suchanek, Günter, Dipl.-Ing., D-7505 Ettlingen (DE)
(74) Vertreter: Geitz, Heinrich, Dr.-Ing.

(56) Entgegenhaltungen:
- EP-A- 0 181 838
- WO-A-86/02996
- DD-A- 267 313
- FR-A- 2 498 751
- US-A- 3 823 484
- PATENT ABSTRACTS OF JAPAN, Band 10, Nr. 127 (P-455)(2184), 13 Mai 1986;& JP - A - 60253809

## Beschreibung

Die Erfindung bezieht sich auf ein Verfahren zum Vermessen der Form von Zylinderbohrungen in Werkstücken, insbesondere von Zylinderbohrungen in Motorblöcken von Brennkraftmaschinen, bei dem wenigstens eine Meßsonde eines Meßkopfs, die mit in Sondenlängsrichtung im Abstand voneinander angeordneten, radial über den Sondenmantel vorstehende Taststifte aufweisenden Meßfühlern ausgerüstet ist, in eine Zylinderbohrung eines Werkstücks eingeführt und dann die Zylinderwand der Zylinderbohrung durch Drehung der Meßsonde um ihre Längsachse mittels der Taststifte in benachbarten Parallelebenen abgetastet wird, ferner auf eine zum Durchführen dieses Meßverfahrens bestimmte Vorrichtung mit einer eine Werkstückaufnahme aufweisenden Meßstation und mit einem auf die Werkstückaufnahme zustellbaren Meßkopf, der wenigstens eine mit einem motorischen Drehantrieb einer Antriebseinheit wirkverbundene Meßsonde besitzt, die mit in axialem Abstand voneinander angeordneten Meßfühlern mit je einem radial über den Sondenmantel vorstehenden Taststift ausgerüstet und in eine Zylinderbohrung eines in der Meßstation auf der Werkstückaufnahme aufgenommenen Werkstücks einführbar ist.

Aus der Firmendruckschrift "INCOMETER-SYSTEM" der Firma BBC PAT Messtechnik GmbH sind bereits ein Verfahren und eine Vorrichtung dieser Art zum gleichzeitigen Vermessen sich achsparallel benachbart in Motorblöcken von Brennkraftmaschinen erstreckender Zylinderbohrungen bekannt. Bei dieser Vorrichtung handelt es sich um eine Maschine zum Überprüfen der Zylinderbohrungen bei Motorblöcken aus der Serienproduktion.

Bei dieser Maschine erstreckt sich durch eine Meßstation innerhalb eines Portals ein Fördersystem zum Zu- und Abführen der Motorblöcke hindurch und ein an einem Querträger des Portals angeordneter Meßkopf mit nach Anzahl und Lage entsprechend den zu vermessenden Zylinderbohrungen achsparallel zueinander angeordneten Meßsonden ist so auf einen in der Meßstation auf einer Werkstückaufnahme lagerichtig aufgenommenen Motorblock zustellbar, daß die Meßsonden in die Zylinderbohrungen des Motorblocks eintauchen. Die Meßsonden stehen mit Drehantrieben in Wirkverbindung und sind mit in Sondenlängsrichtung im Abstand voneinander angeordneten Meßfühlern mit je einem radial über den jeweiligen Sondenmantel vorstehenden Taststift ausgerüstet.

Vermessen werden mittels dieser Vorrichtung die Zylinderbohrungen von in der Meßstation auf einer Werkstückaufnahme lagerichtig aufgenommenen und positionsgenau fixierten Motorblöcken, indem die in die Zylinderbohrungen eingetauchten Meßsonden mit den radial vorstehenden Taststiften der Meßfühler die Zylinderwandungen auf benachbarten Kreisbahnen abtasten und dabei die Form und Lage der Zylinderbohrungen ermitteln.

Vorrichtungen ähnlicher Art und Zweckbestimmung sind auch aus der WO-A-86/02996 und aus der FR-A-2 498 751 vorbekannt.

Beim Gegenstand der erstgenannten Druckschrift handelt es sich um eine Vorrichtung zum Messen von Profilformen von Werkstücken mit Zylinderflächen, die eine Tastvorrichtung und eine an diese angeschlossene elektronische Auswerteschaltung besitzt. Die Tastvorrichtung umfaßt mehrere - in Durchmesserrichtung gesehen - gegeneinander versetzte und unabhängig voneinander in axialer und radialer Richtung verstellbare Meßtaster für das Abtasten von Zylinderflächen in benachbarten Parallelebenen oder für das gleichzeitige Vermessen von mehreren gegeneinander abgesetzten Zylinderflächen.

Die Vorrichtung nach der FR-A-2 498 751 dient hingegen zum gleichzeitigen Vermessen achsparallel angeordneter Zylinderbohrungen und besitzt einen Meßkopf mit mehreren Meßsonden, die durch Zustellen des Meßkopfs auf ein lagerichtig auf dem Tisch der Meßvorrichtung aufgenommenenes Werkstück in dessen Zylinderbohrungen einführbar sind. Die Eintauchtiefe der Meßsonden wird dabei durch Endschalter bestimmt.

Die mit den Meßvorrichtungen nach den vorgenannten Druckschriften verwirklichbaren Meßverfahren erscheinen im Hinblick auf die Genauigkeitsanforderungen beim Vermessen von Zylinderbohrungen verbesserungsbedürftig. Insbesondere die Zylinderbohrungen in Motorblöcken von Brennkraftmaschinen müssen extrem genau sein mit Herstellungstoleranzen im µm-Bereich. Demgemäß sind die Genauigkeitsanforderungen beim Vermessen derartiger Zylinderbohrungen sehr hoch.

Insoweit besteht, ausgehend von der vorbekannten Meßtechnologie, die der Erfindung zugrundeliegende Aufgabe in der Schaffung eines derartigen Genauigkeitsansprüchen genügenden Meßverfahrens und einer der Verfahrensdurchführung dienenden und für diesen Zweck geeigneten Vorrichtung.

In verfahrenstechnischer Hinsicht ist diese Aufgabe dadurch gelöst, daß bei dem Verfahren nach dem Oberbegriff des Patentanspruchs 1 die Meßsonde in die Zylinderbohrung ohne Berührung der Taststifte mit der Zylinderwand eingeführt wird, daß danach durch relatives Verschieben des Werkstücks und der Meßsonde zueinander quer zur Achse der Zylinderbohrung die Taststifte mit der Zylinderwand in Kontakt gebracht werden, daß dann der Meßkopf bezüglich des Werkstücks fixiert und diese Fixation mittels einer Meßkopf und Werkstück in die gegenseitige Fixationslage drängenden Vorspannkraft aufrechterhalten wird und daß anschließend das Vermessen der Form der Zylinderbohrung durch Abtasten der Zylinderwand mittels der Taststifte bei elastisch gebettetem Werkstück und gegenüber anderen Vorrichtungsorganen entkoppeltem, lediglich präzise am Werkstück fixiertem Meßkopf erfolgt.

Anstelle eines Meßkopfs mit nur einer in eine Zylinderbohrung einführbaren Meßsonde ist dieses Meßverfahren auch zum gleichzeitigen Vermessen benachbarter Zylinderbohrungen verwendbar, indem ein Meßkopf mit nach Anzahl und Lage entsprechend den gleichzeitig zu vermessenden Zylinderbohrungen eines Werkstücks angeordneten Meßsonden eingesetzt wird.

Kennzeichnend für das erfindungsgemäße Meßverfahren ist mithin, daß während des Meßvorganges der Meßkopf und das Werkstück gegenseitig fixiert sind und allein durch eine definierte Vorspannkraft in dieser Fixationslage gehalten werden, wobei das Werkstück in der Meßstation elastisch gebettet und der Meßkopf von anderen Vorrichtungsorganen entkoppelt ist. Dadurch sind Fehlereinflüsse infolge äußerer Schwingungsanregungen praktisch vollständig ausgeschaltet.

In vorrichtungstechnischer Hinsicht ist die oben angegebene Aufgabe dadurch gelöst, daß bei der Vorrichtung nach dem Oberbegriff des Patentanspruchs 2 die Werkstückaufnahme in der Meßstation während des Meßvorganges elastisch gebettet ist, daß der Meßkopf und die Werkstückaufnahme quer zur Achse der Zylinderbohrungen relativ zueinander bewegbar sind, um die Taststifte der Meßfühler in Kontakt mit der Wand der zu vermessenden Zylinderbohrung zu bringen, daß der Meßkopf mit in der Meßposition der Meßsonde formschlüssig mit dem Werkstück zusammenwirkenden Positioniermitteln sowie mit sich auf ausgewählten Punkten des Werkstücks abstützenden Distanzmitteln versehen sind, daß der Meßkopf über entkoppelbare Halteelemente an einem vertikal bewegbaren Vorrichtungsoberteil aufgehängt ist, welche Halteelemente im entkoppelten Zustand begrenzte Positionierbewegungen des Meßkopfs quer zur Längserstreckung der Meßsonde zulassen, und daß Mittel zum Andrücken des Meßkopfs an das Werkstück mit einer definierten Vorspannkraft bei entkoppelten Halteelementen vorgesehen sind.

Nach der Vorschrift des oben angegebenen Verfahrens gelingt mittels einer so ausgebildeten Vorrichtung das Vermessen von Zylinderräumen bei Entkopplung des Meßkopfs und angesichts der elastischen Bettung der Werkstückaufnahme auch des Werkstücks und somit unter Ausschaltung äußerer Fehlereinflüsse.

Bei den in der Meßposition der Meßsonde formschlüssig mit dem Werkstück zusammenwirkenden Positioniermitteln kann es sich um Indexstifte handeln, die in Indexbohrungen im Werkstück einführbar sind. Dabei können die Indexstifte mit pneumatisch, hydraulisch oder elektromechanisch arbeitenden Betätigungsmitteln wirkverbunden sein. Die Distanzmittel hingegen können als sich achsparallel zur Meßsonde erstreckende Distanzstifte ausgebildet sein, die bei in Meßposition befindlicher Meßsonde auf ausgewählten und präzise bearbeiteten Kontaktbereichen des Werkstücks aufstehen.

Bei einer Weiterbildung der Vorrichtung ist der Meßkopf über entkoppelbare Halteelemente an einem vertikal bewegbaren Vorrichtungsoberteil aufgehängt, die im entkoppelten Zustand begrenzte Positionierbewegungen des Meßkopfs quer zur Längserstreckung der Meßsonde zulassen, und ferner sind Mittel zum Andrücken des Meßkopfs an das Werkstück mit einer definierten Vorspannkraft bei entkoppelten Halteelementen vorgesehen. Angesichts der begrenzten Querbeweglichkeit des Meßkopfs gelingt es in einfacher Weise, die Meßsonde ohne Berührung der Taststifte mit den Zylinderwänden in die zu vermessenden Zylinderbohrungen einzuführen. Die Taststifte kommen erst durch eine Querverschiebung des Meßkopfs in Kontakt mit den Zylinderwandungen, wenn der Meßkopf lagerichtig zum Werkstück positioniert und die Indexstifte in Eingriff mit den Indexbohrungen des Werkstücks gebracht werden.

Dabei hat es sich als zweckmäßig erwiesen, wenn als Mittel zum Aufbringen einer den Meßkopf in der Meßposition an das Werkstück andrückenden Vorspannkraft Federn dienen, die in der Meßposition von am bewegbaren Oberteil angeordneten Druckstücken um ein vorbestimmtes Maß zusammengedrückt und dadurch vorgespannt werden.

Als ebenfalls vorteilhaft hat sich erwiesen, wenn jedes Halteelement einen in Zustellrichtung formschlüssig fest, gegen die Wirkung von Rückstellmitteln jedoch begrenzt quer verschiebbar mit dem Meßkopf verbundenen Haltebügel sowie ein mit dem bewegbaren Oberteil fest verbundenes Kupplungsglied umfaßt, das bis zum Aufsetzen des Meßkopfs auf das Werkstück formschlüssig fest mit dem Haltebügel zusammenwirkt und beim weiteren Absenken des Oberteils außer Eingriff mit dem Haltebügel gelangt. Die Rückstellmittel, die den begrenzten Querverschiebungen der Haltebügel entgegenwirken, können dabei seitlich an den Haltebügeln angreifende und andererseits am Meßkopf abgestützte Rückstellfedern sein.

Eine gleichfalls weitere Ausgestaltung der Erfindung sieht vor, daß die Druckstücke als mit den Haltebügeln zusammenwirkende Kupplungsglieder ausgebildet sind, wobei ein mit dem vertikal bewegbaren Vorrichtungsoberteil fest verbundener Zapfen eines jeden Kupplungsgliedes eine Ausnehmung in einem oberen Steg des damit zusammenwirkenden Haltebügels durchdringt und ein mit diesem Zapfen verbundener Halteteller in eine die Ausnehmung umgebende unterseitige Lagerbettung des Stegs eingreift, bei in Meßposition stehendem Meßkopf jedoch infolge weiterer Absenkung des Oberteils nach unten aus der Lagerbettung abhebt. Dabei kann innerhalb der Haltebügel jeweils zwischen dem Meßkopf und dem zugeordneten Halteteller eine letzteren in seine Lagerbettung drängende Feder als Mittel zum Aufbringen der den Meßkopf in der Meßposition an das Werkstück andrückenden Vorspannkraft aufgenommen sein.

Gemäß einer anderen Ausgestaltung der Erfindung kann der Meßkopf anstelle nur einer Meßsonde auch mit nach Anzahl und Lage entsprechend den Zylinderbohrungen des zu vermessenden Werkstücks angeordneten Meßsonden ausgerüstet sein, also bei der Auslegung zum Vermessen von Motorblöcken beispielsweise mit vier bzw. sechs Meßsonden. Die Meßsonden sind dann zweckmäßigerweise mit ihren zugeordneten Antriebseinheiten in einem Brückenträger aufgenommen, der seinerseits entkoppelbar und begrenzt quer verschiebbar am vertikal bewegbaren Oberteil aufgehängt ist.

Schließlich ist eine nochmals weitere Ausgestaltung der Erfindung durch einen das Werkstück aufnehmenden Werkstückträger gekennzeichnet, der in der Meßstation auf einer ihrerseits elastisch gebetteten Auflagerplatte aufsteht und dann in einer Präzisionsbettung der Auflagerplatte gelagert ist.

Ferner ist eine Ausführungsform der erfindungsgemäßen Vorrichtung durch eine Einrichtung zum Fördern des Werkstückträgers mit einem auf diesem aufgenommenen Werkstück von einer Be- und/oder Entladestation zur Meßstation und umgekehrt in Form eines Drehtisches mit einer vertikalen Drehachse zwischen diesen Stationen gekennzeichnet, welcher Drehtisch aus einer Transportebene absenkbar ist und in seiner Stellung in der Transportebene den Werkstückträger in einer Präzisionsbettung im Bereich einer Tischausnehmung hängend aufnimmt, während in der abgesenkten Lage des Drehtisches der Werkstückträger in der Meßstation von der Präzisionsbettung der Auflagerplatte aufgenommen ist bzw. in der Be- und/oder Entladestation bei Entkopplung vom Drehtisch auf einer Grundplatte aufsteht.

Eine besonders präzise Aufnahme des Werkstückträgers ist dann gewährleistet, wenn die Präzisionsbettungen der Auflagerplatte und des Drehtisches als konische Lager ausgebildet sind und der Werkstückträger jeweils angepaßte gegenkonische Lagerbereiche besitzt, die in vertikalem Abstand voneinander angeordnet sind.

In den beigefügten Zeichnungen ist ein Ausführungsbeispiel einer erfindungsgemäßen Vorrichtung beschrieben, das nachstehend erläutert werden soll. In schematischen Ansichten zeigen:
- Fig. 1: eine perspektivische Gesamtansicht einer erfindungsgemäßen Meßvorrichtung zum Vermessen der Zylinderbohrungen von Motorblöcken in einer Meßstation mit einem vertikal bewegbaren und auf einen in der Meßstation aufgenommenen Motorblock absenkbaren Meßkopf,
- Fig. 2: in einer gegenüber Fig. 1 vergrößerten Ausschnittansicht die Meßstation mit einem auf einem Werkstückträger aufgenommenen Motorblock und mit dem Meßkopf mit mehreren Meßsonden vor deren Einführungen in die Zylinderbohrungen des Motorblocks,
- Fig. 3: in einem Ausschnitt gemäß III in Fig. 2 eine vergrößerte Ansicht eines Halteelements zum Verbinden des Meßkopfs mit einem bewegbaren Vorrichtungsoberteil,
- Fig. 4: die Meßstation in einer Ausschnittansicht ähnlich Fig. 2 mit auf den Motorblock abgesenktem Meßkopf und in die zu vermessenden Zylinderbohrungen des Motorblocks eingetauchten Meßsonden,
- Fig. 5: in einer Ansicht wie in Fig. 3 ein Halteelement im entkoppelten Zustand und
- Fig. 6: in einer Ansicht ähnlich Fig. 2 das Zu- und Abführen der Motorblöcke zur bzw. von der Meßstation mittels eines Drehtellers.

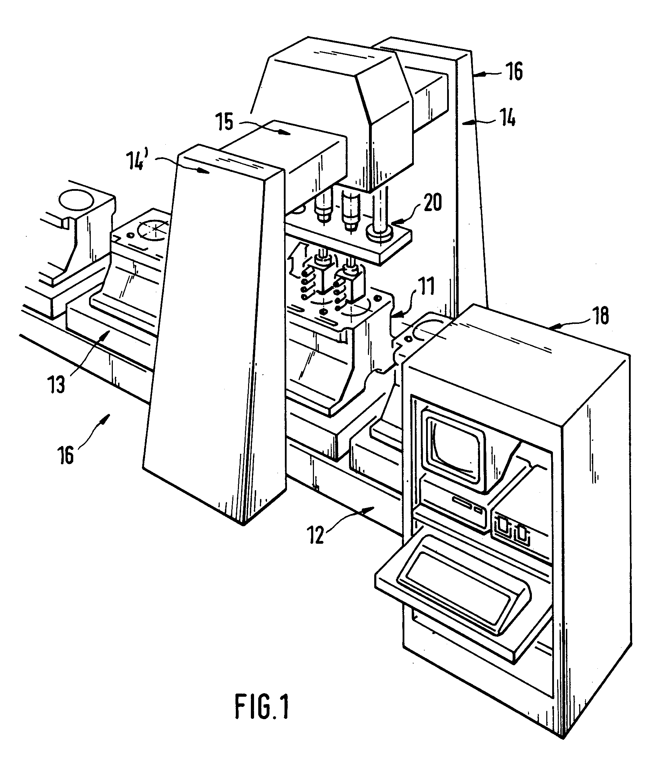

Die in Fig. 1 in ihrer Gesamtheit veranschaulichte Vorrichtung 10 dient zum gleichzeitigen Vermessen der Zylinderbohrungen von Motorblöcken 11 für Brennkraftmaschinen, die mittels einer Fördereinrichtung 12 der Meßstation 13 der Vorrichtung in zunächst hier nicht interessierender Weise zugeführt und nach dem Vermessen von dieser wieder abtransportiert werden. Die Meßstation ist zwischen zwei seitlichen Ständern 14, 14′, die oberseitig durch einen Querholm 15 miteinander verbunden sind, eines große Steifigkeit aufweisenden Portals 16 angeordnet. Die nur angedeutete Fördereinrichtung 12 erstreckt sich durch die bereits erwähnte Meßstation 13 hindurch. Die Vorrichtung besitzt ferner einen über der Meßstation an den die seitlichen Ständer 14, 14′ des Portals 16 miteinander verbindenden Querholm 15 angeordneten Meßkopf 20, der vertikal beweglich und auf einen jeweils in der Meßstation aufgenommenen Motorblock absenkbar ist. Ferner veranschaulicht Fig. 1 eine hier nicht weiter interessierende Steuer- und Auswerteeinheit 18, die seitlich von dem Portal 16 mit der Meßstation und dem in Richtung auf diese absenkbaren Meßkopf 20 angeordnet ist.

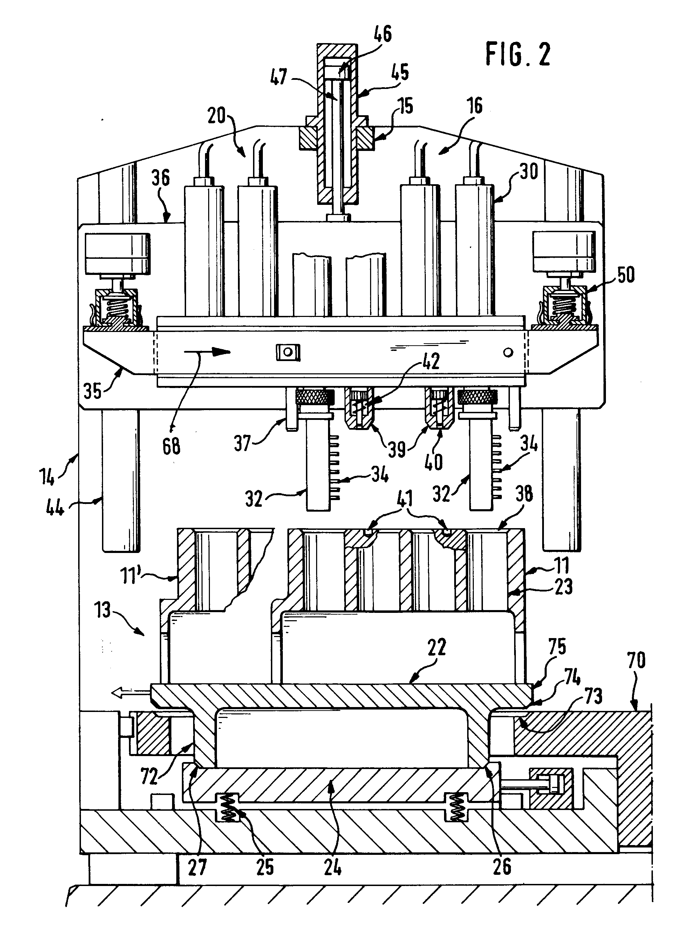

Die Ausschnittansicht nach Fig. 2 zeigt einen in der Meßstation 13 auf einem Werkstückträger 22 aufgenommenen und in nicht dargestellter Weise lagerichtig positionierten Motorblock 11 mit vier parallel zueinander verlaufenden und jeweils im Abstand voneinander angeordneten Zylinderbohrungen 23 in einer Schnittansicht. Anstelle eines Motorblocks mit vier Zylinderbohrungen könnte es sich auch um einen Motorblock mit sechs Zylinderbohrungen handeln, wie bei 11′ angedeutet. Der Werkstückträger 22 ist in unten noch zu beschreibender Weise in die Meßstation 13 bringbar und steht auf einer in der Meßstation elastisch gebetteten Auflagerplatte 24, die sich mittels nur angedeuteter Pufferelemente 25 auf einer Grundplatte der Vorrichtung abstützt. Der Werkstückträger 22 ist mit unteren und die Auflagerplatte oberseitig mit konischen Lagerflächen 26, 27 ausgerüstet, die eine reproduzierbare präzise Positionierung des Werkstückträgers und damit des auf diesem aufgenommenen Motorblocks in der Meßstation gewährleisten.

Fig. 2 zeigt ebenfalls, daß der über dem auf dem Werkstückträger 22 angeordneten Motorblock 11 stehende Meßkopf 20 sechs Antriebseinheiten 30 mit je einer sich unterseitig von diesen forterstreckenden Meßsonde 32 besitzt, von denen allerdings in der Zeichnung nur zwei Meßsonden veranschaulicht sind. Jede Meßsonde ist an der zugeordneten Antriebseinheit fliegend gelagert und erstreckt sich von dieser nach unten auskragend fort. Über die Länge jeder Meßsonde verteilt sind im Abstand voneinander acht Meßfühler mit je einem radial über den Sondenmantel vorstehenden Taststift 34 angeordnet.

Der Meßkopf 20 umfaßt einen Brückenträger 35, der in noch zu beschreibender Weise entkoppelbar an einem Vorrichtungsoberteil 36 aufgenommen ist und an dem die Antriebseinheiten 30 mit den sich nach unten forterstrekkenden Meßsonden 32 nebeneinanderliegend in gleichen Abständen voneinander wie die zu vermessenden Zylinderbohrungen 23 der Motorblöcke 11 aufgenommen sind. Achsparallel zu den Meßsonden erstrecken sich unterseitig von dem genannten Brückenträger 35 des Meßkopfs 20 Distanzstifte 37 zum Aufsetzen auf eine präzise bearbeitete Oberkante 38 des Motorblocks sowie in pneumatisch oder hydraulisch betätigbaren Verschiebeeinheiten 39 aufgenommene Indexstifte 40 fort, die zum lagerichtigen Positionieren des mit in die zu vermessenden Zylinderbohrungen eingetauchten Meßsonden 32 auf den Motorblock abgesenkten Meßkopfs 20 dienen und in der Meßposition in sich von der Oberseite aus in den Motorblock hineinerstreckende Indexbohrungen 41 eingreifen. Die Verschiebeeinheiten sind mit Rückstellfedern 42 ausgerüstet, die beim Verschieben der Indexstifte in ihre Indexpositionen zusammengedrückt werden und nach Wegnahme der Verschiebekraft die Indexstifte in ihre Ursprungslage zurückstellen.

Das den Meßkopf 20 tragende Vorrichtungsoberteil 36 ist in vertikal verlaufenden Führungen 44, die an den seitlichen Ständern des Portals 16 angeordnet sind, vertikal bewegbar aufgenommen. Zum Absenken des Oberteils 36 mit dem Meßkopf 20 dient ein pneumatisch betätigbarer Arbeitszylinder 45, der mit dem Querholm 15 des Portals 16 fest verbunden ist und einen wahlweise vorder- und rückseitig beaufschlagbaren Kolben 46 besitzt, dessen Kolbenstange 47 mit dem Vorrichtungsoberteil 36 fest verbunden ist. Der die Antriebseinheiten 30 mit den Meßsonden 32 tragende Brückenträger 35 des Meßkopfs ist an seinen voneinander entfernten Enden mittels entkoppelbarer Halteelemente 50 am vertikal bewegbaren Vorrichtungsoberteil aufgehängt.

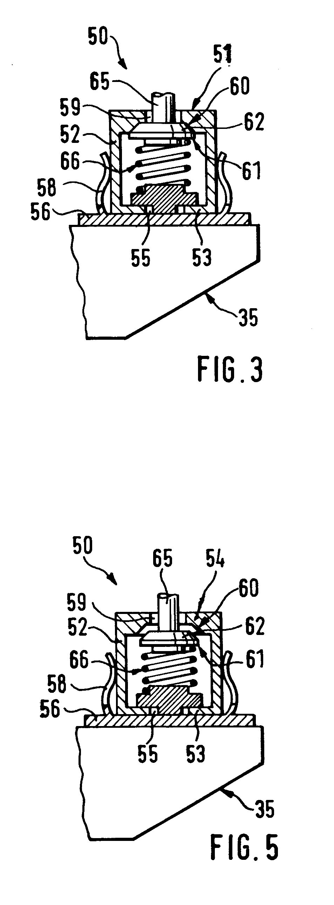

Wie Fig. 3 zeigt, haben diese Halteelemente quer zur Längserstreckung des Brückenträgers 35 begrenzt verschiebbare U-förmige Haltebügel 51. Von den nach unten weisenden freien Enden der Bügelschenkel 52 einwärts gerichtete Flanschteile 53 greifen mit Spiel in Nuten 55 eines jeweils oberseitig mit dem einen Ende des Brückenträgers 35 fest verbundenen Halteplatte 56 formschlüssig ein. Mittels außenseitig an den Bügelschenkeln 52 angreifender Blattfedern 58 werden die Haltebügel 51 in Bezug auf die genannten Halteplatten 56 in einer Mittenposition gehalten. Der den formschlüssig mit den genannten Halteplatten zusammenwirkenden Flanschen 53 gegenüberliegende Steg 54 der Haltebügel 51, der dessen Schenkel 52 miteinander verbindet, ist von einer Ausnehmung 59 mit einer unterseitig konisch gestalteten Bettung 60 durchdrungen und in diese konische Bettung greift ein Halteteller 61 mit einer gegenkonischen Lagerfläche 62 ein, der mit einem sich durch die genannte Ausnehmung hindurcherstreckenden und im bewegbaren Vorrichtungsoberteil 36 fest verankerten Schaft 65 verbunden ist. Innerhalb jedes Haltebügels 51 ist zwischen dem Halteteller 61 und der oberseitig mit dem Brückenträger 35 verbundenen Halteplatte 56 eine zylindrische Schraubenfeder 66 unter Vorspannung aufgenommen, die in der aus Fig. 2 ersichtlichen Betriebsstellung den Halteteller 61 mit seiner konischen Lagerfläche 62 in die gegenkonische Bettung 60 im Steg 54 des Haltebügels 51 drückt.

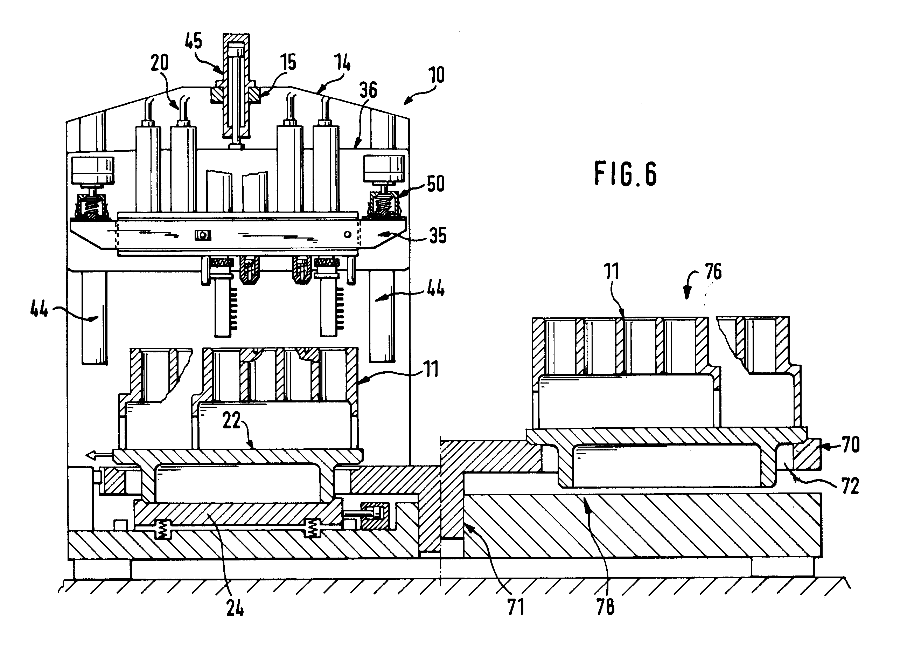

Zum Vermessen der Zylinderbohrungen 23 eines lagerichtig in der Meßstation 13 stehenden Motorblocks 11 wird das Vorrichtungsoberteil 36 mit dem Meßkopf 20 aus der in Fig. 2 ersichtlichen Betriebsstellung abgesenkt, bis die sich unterseitig vom Meßkopf forterstreckenden Distanzstifte 37 unmittelbar über der Oberkante 38 des Motorblocks stehen, jedoch ohne diese zu berühren. Dabei tauchen die Meßsonden 32 ohne Berührung der radial von diesen vorstehenden Taststifte 34 der Meßfühler in die zu vermessenden Zylinderbohrungen 23 ein. Nach dem vorstehend erläuterten Absenken des Meßkopfs auf das Werkstück und das damit einhergehende Eintauchen der Meßsonden in die zu vermessenden Zylinderbohrungen werden die Taststifte 34 mit den Wänden der Zylinderbohrungen 23 durch eine Verschiebung des Meßkopfs 20 quer zur Längserstreckung der Meßsonden 32 in Richtung des Pfeils 68 in Kontakt gebracht und in dieser Position werden die Indexstifte 40 durch Beaufschlagung der zugeordneten Verschiebeeinheiten 39 formschlüssig in die sich von der Oberseite aus in das Werkstück hineinerstreckenden Indexbohrungen 41 eingeführt. Nach dieser Querpositionierung wird durch eine erneute Abwärtsbewegung des Vorrichtungsoberteils 36 der Meßkopf 20 bis zum Aufstehen der Distanzstifte 37 auf der Werkstückoberkante 38 abgesenkt und dann dadurch entkoppelt, daß die Halteteller 61 aus ihren Eingriffslagen mit den konischen Lagerbettungen 60 in den Stegen 54 der Haltebügel 51 gelangen und die vorgespannten Federn 66 um ein vorbestimmtes Maß so zusammendrücken, daß nunmehr der Meßkopf 20 gegenüber dem Vorrichtungsoberteil 36 entkoppelt und in seiner durch die Distanzstifte 37 und die in die Indexbohrungen 41 des Werkstücks eingreifenden Indexstifte 40 definierten Meßposition an das Werkstück angedrückt ist. Fig. 5 zeigt den vom Vorrichtungsoberteil 36 entkoppelten Meßkopf in seiner dem Werkstück positionsgenau zugeordneten und mit einer definierten Vorspannkraft an dieses angedrückten Lage in der Meßposition.

Angesichts der Aufnahme der den Werkstückträger 22 mit dem darauf positionierten Motorblock 11 tragenden Auflagerplatte 24 auf einer elastischen Bettung sind Werkstück und Meßkopf von sonstigen Vorrichtungsorganen entkoppelt und es gelingt die Vermessung der Zylinderbohrungen ohne die Einwirkung äußerer Fehlereinflüsse, indem die Meßsonden 32 mittels der Drehantriebe ihrer Antriebseinheiten 30 in Rotation versetzt werden und die Taststifte 34 der Meßsonden die Zylinderwände auf axial benachbarten Parallelkreisen abtasten.

Nach dem Vermessen der Zylinderbohrungen 23 eines Werkstücks wird zunächst die von den in der Meßposition zusammengedrückten Federn 66 in den Haltebügeln 51 aufgebrachte Vorspannkraft weggenommen, indem das Vorrichtungsoberteil 36 um ein solches Maß hochfährt, daß die konischen Kontaktflächen der Halteteller 61 und der innenseitigen Lagerbettungen 60 in den Haltebügeln 51 zur Zusammenwirkung gelangen und die Distanzstifte 37 um ein geringes Maß von der Werkstückoberkante 38 abheben. Danach werden die in die Indexbohrungen 41 des Werkstücks eingreifenden Indexstifte 40 zurückgezogen, worauf der Meßkopf 20 unter der Wirkung der seitlich an den Haltebügeln 51 angreifenden Federelemente 58 eine die Taststifte 34 von den Wandungen der Zylinderbohrungen 23 abhebende Querverschiebung erfährt. Danach kann das Vorrichtungsoberteil 36 mit dem Meßkopf 20 in die aus Fig. 2 ersichtliche Position hochgefahren werden.

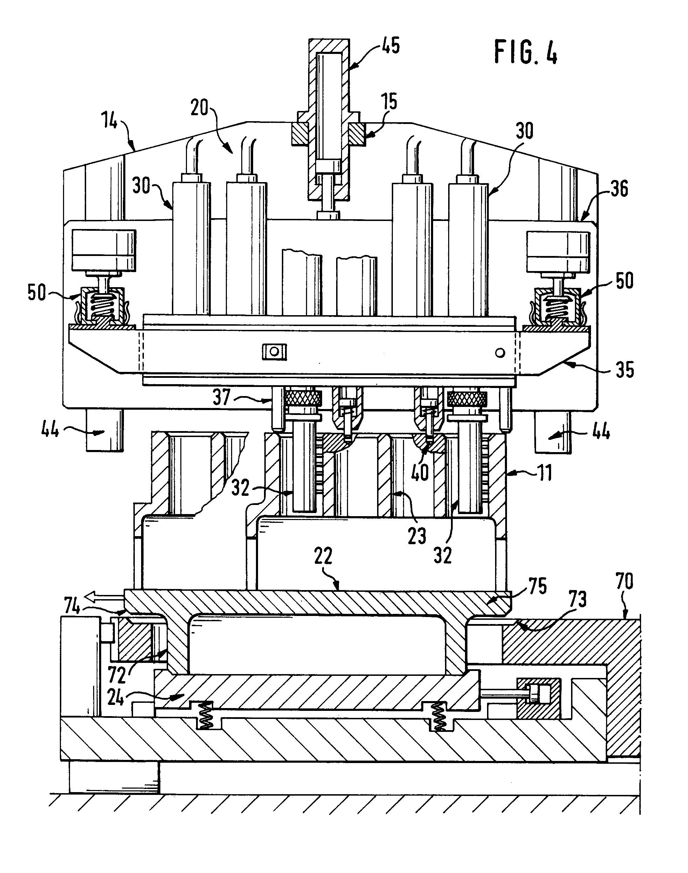

Zum Zu- und Abführen der Motorblöcke zu bzw. von der Meßstation 13 dient ein Drehtisch 70, der im Abstand von der Meßstation mittels eines zentralen Lagerzapfens 71 um eine vertikal verlaufende Achse drehbar ist. Dieser Drehtisch besitzt zwei um 180° gegeneinander versetzt angeordnete Ausnehmungen 72 mit konisch gestalteten Auflagerflächen 73 für ebenfalls konische Auflagerflächen 74 an den Unterseiten einer oberen Platte 75 der Werkstückträger 22. Der Drehtisch 70 ist zwischen der in Fig. 4 in der rechten Hälfte gezeigten angehobenen Position und der abgesenkten Position in der linken Hälfte von Fig. 4 vertikal bewegbar. In jeder der Drehtischausnehmungen 72 ist ein Werkstückträger 22 aufgenommen, der in der angehobenen Stellung des Drehtisches 70 in den konischen Lagerflächen 73 der Drehtischausnehmung hängt, hingegen in der Absenklage in der Meßstation 13 in der oben bereits erläuterten Weise auf der elastisch gebetteten Auflagerplatte 24 aufsteht und mithin keinerlei Kontakt mehr mit dem Drehtisch hat.

Außerhalb der Meßstation befindet sich eine Be- und Entladestation 76, in der die Werkstücke in einer um 180° gegenüber der Stellung in der Meßstation versetzten Lage auf den dann auf einer Grundplatte 78 aufstehenden Werkstückträger 22 aufgesetzt und lagerichtig positioniert werden. Wenn dann der Drehtisch 70 in die in der rechten Hälfte von Fig. 6 ersichtliche Lage angehoben wird, nehmen die konischen Lagerflächen 73 der Drehtischausnehmungen 72 die Werkstückträger hängend auf. Durch Drehung des Drehtisches 70 um seine Vertikalachse um 180° gelangt der mit einem Motorblock beladene Werkstückträger dann in die Meßstation 13, aus der bei dieser Drehung der zweite Werkstückträger 22 mit einem zuvor vermessenen Motorblock abgeführt und in die Be- und Entladestation 76 gedreht wird. Durch erneutes Absenken des Drehtisches in die aus der linken Hälfte von Fig. 6 ersichtliche Lage werden der in der Meßstation stehende Werkstückträger in der Lagerbettung 27 der Auflagerplatte 24 aufgenommen und der in der Be- und Entladestation stehende Werkstückträger auf der Grundplatte 78 abgestellt.

## Patentansprüche

1. Verfahren zum Vermessen der Form von Zylinderbohrungen in Werkstücken, insbesondere von Zylinderbohrungen in Motorblöcken von Brennkraftmaschinen, bei dem wenigstens eine Meßsonde eines Meßkopfs, die mit in Sondenlängsrichtung im Abstand voneinander angeordneten, radial über den Sondenmantel vorstehende Taststifte aufweisenden Meßfühlern ausgerüstet ist, in eine Zylinderbohrung eines Werkstücks eingeführt und dann die Zylinderwand der Zylinderbohrung durch Drehung der Meßsonde um ihre Längsachse mittels der Taststifte in benachbarten Parallelebenen abgetastet wird,
dadurch gekennzeichnet,
daß die Meßsonde (33) in die Zylinderbohrung (23) ohne Berührung der Taststifte (34) mit der Zylinderwand eingeführt wird, daß danach durch relatives Verschieben des Werkstücks (11) und der Meßsonde (32) zueinander quer zur Achse der Zylinderbohrung (23) die Taststifte (34) mit der Zylinderwand in Kontakt gebracht werden, daß dann der Meßkopf (20) bezüglich des Werkstücks (11) fixiert und diese Fixation mittels einer Meßkopf und Werkstück in die gegenseitige Fixationslage drängenden Vorspannkraft aufrechterhalten wird und daß anschließend das Vermessen der Form der Zylinderbohrung (23) durch Abtasten der Zylinderwand mittels der Taststifte (34) bei elastisch gebettetem Werkstück (11) und gegenüber anderen Vorrichtungsorganen entkoppeltem, lediglich präzise am Werkstück fixiertem Meßkopf (20) erfolgt.

2. Vorrichtung zum Durchführen des Meßverfahrens nach Anspruch 1, mit einer eine Werkstückaufnahme aufweisenden Meßstation und mit einem auf die Werkstückaufnahme zustellbaren Meßkopf, der wenigstens eine mit einem motorischen Drehantrieb einer Antriebseinheit wirkverbundene Meßsonde besitzt, die mit in axialem Abstand voneinander angeordneten Meßfühlern mit je einem radial über den Sondenmantel vorstehenden Taststift ausgerüstet und in eine Zylinderbohrung eines in der Meßstation auf der Werkstückaufnahme aufgenommenen Werkstücks einführbar ist,
dadurch gekennzeichnet,
daß die Werkstückaufnahme (22, 24) in der Meßstation (13) während des Meßvorganges elastisch gebettet ist, daß der Meßkopf (20) und die Werkstückaufnahme (22, 24) quer zur Achse der Zylinderbohrungen (23) relativ zueinander bewegbar sind, um die Taststifte (34) der Meßfühler in Kontakt mit der Wand der zu vermessenden Zylinderbohrung zu bringen, daß der Meßkopf (20) mit in der Meßposition der Meßsonde (32) formschlüssig mit dem Werkstück (11) zusammenwirkenden Positioniermitteln (40) sowie mit sich auf ausgewählten Punkten des Werkstücks abstützenden Distanzmitteln (37) versehen sind, daß der Meßkopf (20) über entkoppelbare Halteelemente (50) an einem vertikal bewegbaren Vorrichtungsoberteil (36) aufgehängt ist, die im entkoppelten Zustand begrenzte Positionierbewegungen des Meßkopfs quer zur Längserstreckung der Meßsonde zulassen, und daß Mittel (61, 65, 66) zum Andrücken des Meßkopfs an das Werkstück (11) mit einer definierten Vorspannkraft bei entkoppelten Halteelementen (50) vorgesehen sind.

3. Vorrichtung nach Anspruch 2, dadurch gekennzeichnet, daß es sich bei den Positioniermitteln um Indexstifte (40) handelt, die in Indexbohrungen (41) im Werkstück (11) einführbar sind.

4. Vorrichtung nach Anspruch 3, dadurch gekennzeichnet, daß die Indexstifte (40) mit pneumatisch, hydraulisch oder elektromechanisch arbeitenden Betätigungsmitteln (39) wirkverbunden sind.

5. Vorrichtung nach einem der Ansprüche 3 bis 5, dadurch gekennzeichnet, daß es sich bei den Distanzmitteln um achsparallel zur Meßsonde (32) erstreckende Distanzstifte (37) handelt.

6. Vorrichtung nach einem der Ansprüche 2 bis 5, dadurch gekennzeichnet, daß als Mittel zum Aufbringen einer den Meßkopf (20) in der Meßposition an das Werkstück (11) andrückenden Vorspannkraft Federn (66) dienen, die in der Meßposition von am Oberteil (36) angeordneten Druckstücken (61, 65) um ein vorbestimmtes Maß zusammengedrückt und dadurch vorgespannt werden.

7. Vorrichtung nach einem der Ansprüche 2 bis 6, dadurch gekennzeichnet, daß jedes Halteelement (50) einen in Zustellrichtung zum Werkstück (11) formschlüssig fest, gegen die Wirkung von Rückstellmitteln (58) jedoch begrenzt quer verschiebbar mit dem Meßkopf (20) verbundenen Haltebügel (51) sowie ein mit dem bewegbaren Oberteil (36) fest verbundenes Kupplungsglied (61, 65) umfaßt, das bis zum Aufsetzen des Meßkopfs auf das Werkstück formschlüssig fest mit dem Haltebügel zusammenwirkt und beim weiteren Absenken des Oberteils außer Eingriff mit dem Haltebügel gelangt.

8. Vorrichtung nach Anspruch 7, dadurch gekennzeichnet, daß die Querverschiebungen der Haltebügel (51) entgegenwirkenden Rückstellmittel seitlich an den Haltebügeln angreifende und andererseits am Meßkopf abgestützte Rückstellfedern (58) sind.

9. Vorrichtung nach einem der Ansprüche 6 bis 8, dadurch gekennzeichnet, daß die Druckstücke als mit den Haltebügeln (51) zusammenwirkende Kupplungsglieder (61, 65) ausgebildet sind, wobei ein mit dem vertikal bewegbaren Vorrichtungsoberteil (36) fest verbundener Zapfen (65) eines jeden Kupplungsgliedes eine Ausnehmung (59) in einem oberen Steg (54) des damit zusammenwirkenden Haltebügels (51) durchdringt und ein mit diesem Zapfen verbundener Halteteller (61) in eine die Ausnehmung (59) umgebende unterseitige Lagerbettung (60) des Stegs (54) eingreift, bei in Meßposition stehendem Meßkopf (20) jedoch infolge weiterer Absenkung des Oberteils (36) nach unten aus der Lagerbettung (60) abhebt.

10. Vorichtung nach Anspruch 9, dadurch gekennzeichnet, daß innerhalb der Haltebügel (51) jeweils zwischen dem Meßkopf (20) und dem zugeordneten Halteteller (61) eine letzteren in seine Lagerbettung (60) drängende Feder (66) als Mittel zum Aufbringen der den Meßkopf in der Meßposition an das Werkstück (11) andrückenden Vorspannkraft aufgenommen ist.

11. Vorrichtung nach einem der Ansprüche 2 bis 10, dadurch gekennzeichnet, daß der Meßkopf (20) mit nach Anzahl und Lage entsprechend den zu vermessenden Zylinderbohrungen (23) des Werkstücks (11) angeordneten Meßsonden (32) ausgerüstet ist.

12. Vorrichtung nach Anspruch 11, dadurch gekennzeichnet, daß die Meßsonden (32) mit ihren zugeordneten Antriebseinheiten (30) in einem Brückenträger (35) aufgenommen sind, der seinerseits entkoppelbar und begrenzt quer verschiebbar am vertikal bewegbaren Vorrichtungsoberteil (36) aufgehängt ist.

13. Vorrichtung nach einem der Ansprüche 2 bis 12, gekennzeichnet durch einen das Werkstück (11) aufnehmenden Werkstückträger (22), der in der Meßstation (13) auf einer ihrerseits elastisch gebetteten Auflagerplatte (24) aufsteht und dann in einer Präzisionsbettung (27) der Auflagerplatte gelagert ist.

14. Vorrichtung nach Anspruch 13, gekennzeichnet durch eine Einrichtung zum Fördern des Werkstückträgers (22) mit einem auf diesem aufgenommenen Werkstück (11) von einer Be- und/oder Entladestation (76) zur Meßstation (13) und umgekehrt in Form eines Drehtisches (70) mit einer vertikalen Drehachse zwischen diesen Stationen, der aus einer Transportebene absenkbar ist und in seiner Stellung in der Transportebene den Werkstückträger in einer Präzisionsbettung (73) im Bereich einer Tischausnehmung (72) hängend aufnimmt, während in der abgesenkten Lage des Drehtisches der Werkstückträger in der Präzisionsbettung (27) der Auflagerplatte (24) aufgenommen ist bzw. in der Be- und/oder Entladestation (76) bei Entkopplung vom Drehtisch (70) auf einer Grundplatte (78) aufsteht.

15. Vorichtung nach Anspruch 13 oder 14, dadurch gekennzeichnet, daß die Präzisionsbettungen der Auflagerplatte (24) und des Drehtisches (70) als konische Lager (27, 73) ausgebildet sind und daß der Werkstückträger (22) jeweils angepaßte gegenkonische Lagerbereiche (26, 74) besitzt, die in vertikalem Abstand voneinander angeordnet sind.

## Claims

1. Method for the measurement of the shape of cylinder bores in workpieces, in particular of cylinder bores in engine blocks of internal combustion engines, in which method at least one measuring probe of a measuring head is equipped with measuring feelers, which are arranged one at a spacing from the other in the longitudinal direction of the probe and display measuring pins projecting radially over the probe casing, and introduced into the cylinder bore of a workpiece and the cylinder wall of the cylinder bore is then scanned in adjacent parallel planes by means of the scanning pins through rotation of the measuring probe about its longitudinal axis, characterised thereby, that the measuring probe (32) is introduced into the cylinder bore (23) without contact of the scanning pins (34) with the cylinder wall, that the scanning pins (34) are thereafter brought into contact with the cylinder wall through displacement of the workpiece (11) and the measuring probe (32) one relative to the other transversely to the axis of the cylinder bore (23), that the measuring head (20) is then fixed relative to the workpiece (11) and this fixing is maintained by means of a biassing force urging the measuring head and the workpiece into the mutually fixed position and that the measuring of the shape of the cylinder bore (23) subsequently takes place through scanning of the cylinder wall by means of the scanning pins (34) with the workpiece (11) embedded elastically and the measuring head (20) merely fixed precisely at the workpiece and uncoupled from other device organs.

2. Device for the performance of the method of measurement according to claim 1, with a measuring station displaying a workpiece receptacle and with a measuring head which is adjustable relative to the workpiece receptacle and comprises at least one measuring probe which is operatively connected with a motorised rotary drive of a drive unit, is equipped with measuring feelers, which are arranged one at a spacing from the other and each have a scanning pin projecting radially over the probe casing, and is introducible into a cylinder bore of a workpiece received on the workpiece receptacle in the measuring station, characterised thereby, that the workpiece receptacle (22, 24) is elastically embedded in the measuring station (13) during the measurement operation, that the measuring head (20) and the workpiece receptacle (22, 24) are movable one relative to the other transversely to the axis of the cylinder bores (23) in order to bring the scanning pins (34) of the measuring feelers into contact with the wall of the cylinder bore to be measured, that the measuring head (20) is provided with positioning means (40), which co-operate shape-lockingly with the workpiece (11) in the measuring position of the measuring probe (32), as well as with spacer means (37) bearing on selected points of the workpiece, that the measuring head (20) is suspended at a vertically movable upper device part (36) by way of disengageable retaining elements (50), which in the disengaged state permit limited positioning movements of the measuring head (20) transversely to the longitudinal extent of the measuring probe, and that means (61, 65, 66) are provided for urging the measuring head (20) against the workpiece (11) with a defined biassing force while the retaining elements (50) are disengaged.

3. Device according to claim 2, characterised thereby, that indexing pins (40), which are introducible into indexing bores (41) in the workpiece (11), are concerned in the case of the positioning means.

4. Device according to claim 3, characterised thereby, that the indexing pins (40) are operatively connected with pneumatically, hydraulically or electro-mechanically operative actuating means (39).

5. Device according to one of the claims 3 to 5, characterised thereby, that spacer pins (37) extending parallelly to the axis of the measuring probe (32) are concerned in the case of the spacer means.

6. Device according to one of the claims 2 to 5, characterised thereby, that springs (66), which in the measuring position are compressed by a predetermined amount by pressure members (61, 65) arranged at the upper part (36), and biassed thereby, serve as means for the exertion of a biassing force urging the measuring head (20) against the workpiece (11) in the measuring position.

7. Device according to one of the claims 2 to 6, characterised thereby, that each retaining element (50) comprises a retaining bracket (51), which is connected with the measuring head (20) firmly in shape-locking manner in the direction of setting towards the workpiece (11), however to be limitedly transversely displaceable against the effect of restoring means, as well as a coupling member (61, 65), which is firmly connected with the movable upper part (36) and which until the measuring head (20) is placed onto the workpiece co-operates firmly in shape-locking manner with the retaining bracket and on further lowering of the upper part comes out of engagement with the retaining bracket.

8. Device according to claim 7, characterised thereby, that the restoring means counteracting the transverse displacements of the retaining brackets (51) are restoring springs (58) engaging laterally at the retaining brackets and borne at the other end at the measuring head (20).

9. Device according to one of the claims 6 to 8, characterised thereby, that the pressure members are constructed as coupling members (61, 65) co-operating with the retaining brackets (51), wherein a spigot (65), which is firmly connected with the vertically movable upper device part (36), of each coupling member penetrates a cut-out portion (59) in an upper web (54) of the retaining bracket (51) co-operating therewith and a retaining plate (61) connected with this spigot engages into a bearing bed (60), which surrounds the cut-out portion (59) at the underside, of the web (54) when the measuring head (20) stands in the measuring position, however lifts off from the bearing bed (60) downwardly in consequence of further lowering of the upper part (36).

10. Device according to claim 9, characterised thereby, that within the retaining brackets (51) and each time between the measuring head (20) and the associated retaining plate (61), a spring (66) urging the latter into its bearing bed (60) is received as means for the exertion of the biassing force urging the measuring head (20) against the workpiece (11) in the measuring position.

11. Device according to one of the claims 2 to 10, characterised thereby, that the measuring head (20) is equipped with measuring probes (32) corresponding in number and position with the cylinder bores (23) of the workpiece (11), which are to be measured.

12. Device according to claim 11, characterised thereby, that the measuring probes (32) with their associated drive units (30) are received in a bridge carrier (35), which in its turn is suspended at the vertically movable upper device part (36) to be disengageable and limitedly movable transversely.

13. Device according to one of the claims 2 to 12, characterised by a workpiece carrier (22), which receives the workpiece (11) and stands up in the measuring station (13) on a bearing plate (24), which in its turn is bedded elastically, and is then borne in a precision bedding (27) of the bearing plate.

14. Device according to claim 13, characterised by an equipment for the conveying of the workpiece carrier (22) with a workpiece (11) received thereon from a loading and/or unloading station (76) to the measuring station (13) and back in the form of a turntable (70) with a vertical axis of rotation between these stations, which is lowerable out of a transport plane and in its setting in the transport plane receives the workpiece carrier (22) hanging in the region of a cut-out table portion (72) in a precision bedding (73), whilst the workpiece carrier in the lowered position of the turntable is received in the precision bedding (27) of the bearing plate (24) or stands up on a base plate (78) on uncoupling from the turntable (70) in the loading and/or unloading station (76).

15. Device according to claim 13 or 14, characterised thereby, that the precision beddings of the bearing plate (24) and of the turntable (70) are formed as conical bearings (27, 73) and that the workpiece carrier (22) has respectively matched counterconical bearing regions (26, 74), which are arranged one at a vertical spacing from the other.

## Revendications

1. Procédé pour mesurer la forme d'alésages cylindriques dans des pièces en oeuvre, notamment d'alésages cylindriques de blocs-cylindres de moteurs à combustion interne, procédé dans lequel au moins une sonde de mesure d'une tête de mesure, qui est munie de capteurs disposés à distance les uns des autres dans le sens longitudinal de la sonde, et présentant des palpeurs en saillie radiale par rapport à la surface latérale de la sonde, est insérée dans un alésage cylindrique d'une pièce en oeuvre, la paroi cylindrique de l'alésage cylindrique étant ensuite explorée, par rotation de la sonde de mesure autour de son axe longitudinal, à l'aide des palpeurs dans des plans parallèles voisins, caractérisé en ce que la sonde de mesure (33) est insérée dans l'alésage cylindrique (23) sans qu'il y ait contact des palpeurs (34) avec la paroi cylindrique ; que, par déplacement relatif de la pièce en oeuvre (11) et de la sonde de mesure (12) l'une contre l'autre, et perpendiculairement à l'axe de l'alésage cylindrique (23), les palpeurs (34) sont ensuite mis en contact avec la paroi cylindrique ; puis que la tête de mesure (20) est fixée par rapport à la pièce en oeuvre (11), et cette fixation est maintenue à l'aide d'une force de prétension, qui pousse la tête de mesure et la pièce en oeuvre dans la position opposée de fixation ; puis que l'on procède à la mesure de la forme de l'alésage cylindrique (23) par exploration de la paroi cylindrique à l'aide des palpeurs (34), la pièce en oeuvre (11) étant logée sur un support élastique, et à l'aide de la tête de mesure (20), désaccouplée par rapport à d'autres organes du dispositif, et fixée d'une manière précise uniquement à la pièce en oeuvre.

2. Dispositif pour mettre en oeuvre le procédé de mesure selon la revendication 1, comportant une station de mesure présentant une fixation de pièce en oeuvre, et une tête de mesure pouvant avancer vers la fixation de la pièce en oeuvre, tête de mesure comportant au moins une sonde de mesure reliée à un entraînement motorisé en rotation d'une unité d'entraînement, sonde de mesure équipée de capteurs disposés à une certaine distance axiale les uns des autres et possédant chacun un palpeur en saillie radiale par rapport à la surface latérale de la sonde, la sonde de mesure pouvant être insérée dans un alésage cylindrique d'une pièce en oeuvre logée dans la station de mesure, sur la fixation de pièce, caractérisé en ce que la fixation de pièce en oeuvre (22, 24) est logée par logement élastique dans la station de mesure (13) pendant l'opération de mesure ; que la tête de mesure (20) et la fixation de pièce (22, 24) peuvent se déplacer l'une par rapport à l'autre, perpendiculairement à l'axe des alésages cylindriques (23) pour mettre en contact les palpeurs (34) des capteurs avec la paroi de l'alésage cylindrique à mesurer ; que la tête de mesure (20) est pourvue d'organes de positionnement (40), coopérant, en position de mesure de la sonde de mesure (32) et par une liaison avec correspondance de forme, avec la pièce en oeuvre (11), ainsi que d'organes d'écartement (37), qui s'appuient sur des points sélectionnés de la pièce en oeuvre ; que la tête de mesure (20) est, par l'intermédiaire d'éléments d'arrêt désaccouplables (30), à une partie supérieure (36), pouvant se déplacer dans le sens vertical, du dispositif, éléments d'arrêt qui, à l'état désaccouplé, autorisent des déplacements limités de positionnement de la tête de mesure perpendiculairement à l'étendue longitudinale de la sonde de mesure ; et que l'on prévoit des organes (61, 65, 66), destinés à appuyer la tête de mesure contre la pièce en oeuvre (11), selon une force de prétension parfaitement définie, quand les éléments d'arrêt (50) sont désaccouplés.

3. Dispositif selon la revendication 2, caractérisé en ce que, pour ce qui est des organes de positionnement, il s'agit de doigts d'indexage (40), qui peuvent être insérés dans des trous d'indexage (41) aménagés dans la pièce en oeuvre (11).

4. Dispositif selon la revendication 3, caractérisé en ce que les doigts d'indexage (40) sont reliés à des organes de manoeuvre (39), pneumatiques, hydrauliques ou électromécaniques.

5. Dispositif selon l'une des revendications 3 à 5, caractérisé en ce que, pour ce qu'il est des organes d'écartement, il s'agit de doigts d'écartement dont l'axe est parallèle à celui de la sonde de mesure (32).

6. Dispositif selon l'une des revendications 2 à 5, caractérisé en ce qu'on utilise comme organes pour appliquer une force de pré-tension, qui appuie la tête de mesure (20), en position de mesure, contre la pièce en oeuvre (11), des ressorts (66) qui, quand les membres de pression (61, 65), disposés sur la partie supérieure (36), sont en position de mesure, sont comprimés selon une compression prédéterminée, puis subissent une prétension.

7. Dispositif selon l'une des revendications 2 à 6, caractérisé en ce que chaque élément d'arrêt (50) comporte un étrier de retenue (51) qui, dans la direction d'avance vers la pièce en oeuvre (11), est relié à la tête de mesure (20) par une liaison solidaire par correspondance de forme, mais en pouvant subir un déplacement transversal limité contre l'action d'organes de rappel (58), ainsi qu'un organe d'accouplement (61, 65), lié à demeure à la partie supérieure mobile (36), organe d'accouplement qui, jusqu'à la mise en place de la tête de mesure sur la pièce en oeuvre, coopère d'une manière solidaire et par liaison avec correspondance de forme avec l'étrier de retenue et qui, quand la partie supérieure poursuit son déplacement vers le bas, se désaccouple de l'étrier de retenue.

8. Dispositif selon la revendication 7, caractérisé en ce que les organes de rappel, qui vont à l'encontre des déplacements transversaux des étriers de retenue (51), sont des ressorts de rappel (58), qui agissent latéralement sur les étriers de retenue et par ailleurs s'appuient sur la tête de mesure.

9. Dispositif selon l'une des revendications 6 à 8, caractérisé en ce que les membres de pression sont conçus comme des organes d'accouplement (61, 65), qui coopèrent avec les étriers de retenue (51), un tourillon (65) de chaque organe d'accouplement, fixé à demeure à la partie supérieure (36), pouvant subir un déplacement vertical, du dispositif, traversant un évidement (59) aménagé dans une traverse supérieure (54) de l'étrier de retenue (51) coopérant avec ce dernier, un disque de retenue (61), relié à ce tourillon, entrant en prise avec une plate-forme (60) de la traverse (54), la plate-forme étant située en-dessous et entourant l'évidement (59), le disque de retenue, quand la tête de mesure (20) est en position de mesure, se soulevant cependant, en conséquence d'une poursuite de l'abaissement de la partie supérieure (36), vers le bas en s'écartant de la plate-forme (60).

10. Dispositif selon la revendication 9, caractérisé en ce que, à l'intérieur de chacun des étriers de retenue (51), entre la tête de mesure (20) et le disque de retenue correspondant (61), on trouve un ressort (66), qui pousse ce disque dans sa plate-forme (60), le ressort servant de moyen permettant d'appliquer la force de prétension qui appuie la tête de mesure, en position de mesure, contre la pièce en oeuvre (11).

11. Dispositif selon l'une des revendications 2 à 10, caractérisé en ce que la tête de mesure (10) est munie de sondes de mesure (32) dont le nombre et la position correspondent aux alésages cylindriques à mesurer (23) de la pièce en oeuvre (11).

12. Dispositif selon la revendication 11, caractérisé en ce que les sondes de mesure (32) sont, avec les unités d'entraînement (30) qui leur sont affectées, logées dans une poutre (35), qui pour sa part est suspendue de façon à pouvoir être désaccouplée, et pouvant subir un déplacement transversal limité sur la partie supérieure (36), mobile dans le sens vertical, du dispositif.

13. Dispositif selon l'une des revendications 2 à 12, caractérisé en ce qu'il comporte un porte-pièce (22), destiné à loger la pièce en oeuvre (11), porte-pièce qui, dans la station de mesure (13), se trouve sur une plaque d'appui (24) qui pour sa part est logée par un logement élastique, puis est placé dans une plate-forme de précision (27) de la plaque d'appui.

14. Dispositif selon la revendication 13, caractérisé en ce qu'il comporte un système destiné à déplacer le porte-pièce (22), sur lequel est logée une pièce en oeuvre (11), d'une station de chargement et/ou de déchargement (76) à la station de mesure (13) et inversement, sous forme d'un plateau tournant (70) comportant un axe de rotation vertical entre ces stations, plateau pouvant être abaissé sur un plan de transport et qui, dans sa position correspondant au plan de transport, loge en suspension le porte-pièce dans une plate-forme de précision (73) dans la zone d'un évidement (72) aménagé dans le plateau, tandis que, quand le plateau tournant est en position abaissée, le porte-pièce est logé dans la plate-forme de précision (27) de la plaque d'appui (24) ou encore, dans la position de chargement et/ou de déchargement (76), et lors du désaccouplement du plateau tournant (70), se trouve sur un socle (78).

15. Dispositif selon la revendication 13 ou 14, caractérisé en ce que les plates-formes de précision de la plaque d'appui (24) et du plateau tournant (70) sont conçues comme des paliers coniques (27, 73), et que le porte-pièce (22) a des zones d'appui contre-coniques adaptées (26, 74), disposées à une certaine distance verticale l'une de l'autre.
